# EUROPÄISCHE PATENTSCHRIFT

(11) **EP 1 296 865 B1**
(45) Veröffentlichungstag und Bekanntmachung des Hinweises auf die Patenterteilung: **08.09.2004**
(21) Anmeldenummer: 01951588.1
(22) Anmeldetag: 15.06.2001
(51) Int. Cl.: B60T 8/36

(54) **VERFAHREN UND REGELSYSTEM ZUR ANSTEUERUNG EINES ELEKTRONISCH REGELBAREN BREMSBETÄTIGUNGSSYSTEMS**
METHOD AND AUTOMATIC CONTROL SYSTEM FOR ACTUATING AN ELECTRONICALLY CONTROLLED BRAKE ACTUATION SYSTEM
PROCEDE ET SYSTEME ASSERVI DE COMMANDE D'UN SYSTEME DE FREINAGE A REGULATION ELECTRONIQUE

(30) Priorität: 20.06.2000 DE 10031011; 13.02.2001 DE 10106464
(43) Veröffentlichungstag der Anmeldung: 02.04.2003
(73) Patentinhaber: Continental Teves AG & Co. oHG, 60488 Frankfurt (DE)
(72) Erfinder: BÖHM, Jürgen, D-65558 Oberneisen (DE); ULLRICH, Thorsten, D-64579 Gernsheim (DE)
(86) Internationale Anmeldenummer: PCT/EP2001/006732
(87) Internationale Veröffentlichungsnummer: WO 2001/098124

(56) Entgegenhaltungen:
- EP-B- 0 832 019
- DE-A- 3 543 145
- DE-A- 19 654 427
- DE-A- 19 707 960
- US-A- 4 802 562

## Beschreibung

Die Erfindung betrifft ein Verfahren sowie ein Regelsystem zur Ansteuerung eines elektronisch regelbares Bremsbetätigungssystems für Kraftfahrzeuge, mit einem drucklosen Druckmittelvorratsbehälter, mit mindestens einer durch eine elektronische Steuereinheit ansteuerbaren Druckquelle, mit deren Druck Radbremsen des Fahrzeuges beaufschlagbar sind, denen mittels einer elektrischen Größe analog ansteuerbare Druckregelventile zugeordnet sind, die die Radbremsen wahlweise mit der Druckquelle oder dem Druckmittelvorratsbehälter verbinden.

Ein derartiges Bremsbetätigungssystem ist zum Beispiel aus der EP 0 832 019 B1 bekannt. Die den Radbremsen zugeordneten Druckregelventile des vorbekannten Bremsbetätigungssystems sind als paarweise angeordnete elektromagnetisch analog ansteuerbare Ventile nach Sitzventilbauart ausgeführt, von denen die in der Verbindung zwischen der Druckquelle und den Radbremsen geschalteten Einlaßventile als stromlos geschlossene Sitzventile ausgebildet sind und in seiner geschlossenen Schaltstellung eine Druckbegrenzungsfunktion erfüllen, während die in der Verbindung zwischen den Radbremsen und dem Druckmittelvorratsbehälter geschalteten Auslaßventile als stromlos offene Ventile ausgebildet sind, die in ihrer offenen Schaltstellung die Verbindung freigeben und in ihrer geschlossenen Schaltstellung absperren.

Die vorhin erwähnte Veröffentlichung lässt jedoch keine Maßnahmen erkennen, die eine Anpassung der zu regelnden Volumenströme an den jeweiligen Volumenbedarf sowie die gewünschten Druckänderungsgeschwindigkeiten ermöglichen.

Es ist jedoch bekannt, derartige Anpassungen durch Verwendung von mechanischen Blenden zu erreichen, die den erwähnten Ventilen vorgeschaltet sind. Der Einsatz derartiger Blenden ist jedoch mit einem höheren konstruktiven Aufwand verbunden, um für die gewünschten Parameter geeignete Ventilausführungen zu realisieren.

Es ist daher Aufgabe der vorliegenden Erfindung, ein Verfahren zur Ansteuerung eines elektronisch regelbaren Bremsbetätigungssystems der eingangs genannten Gattung sowie ein Regelsystem vorzuschlagen, die es ermöglichen, auf die Verwendung der mechanischen Blenden zu verzichten.

Diese Aufgabe wird verfahrensmäßig dadurch gelöst, dass bei der Ansteuerung des betrachteten Druckregelventils eine von dem an ihm anliegenden hydraulischen Differenzdruck abhängige Begrenzung der elektrischen Größe derart durchgeführt wird, dass gewünschte maximale Druckänderungsgeschwindigkeiten durch Vorgabe eines gewünschten maximalen Druckmittelvolumenstroms abhängig von dem hydraulischen Differenzdruck eingestellt werden.

Zur Konkretisierung des Erfindungsgedankens ist vorgesehen, daß die Druckregelventile als elektromagnetisch ansteuerbare Ventile ausgeführt sind und daß die elektrische Größe ein dem elektromagnetischen Antrieb zuzuführender elektrischer Strom ist, oder daß die Druckregelventile als piezoelektrisch ansteuerbare Ventile ausgeführt sind und daß die elektrische Größe eine dem Piezoantrieb zuzuführende elektrische Spannung ist. Dabei ist es besonders vorteilhaft, wenn zur Begrenzung des dem betrachteten Druckregelventil zuzuführenden Stromes eine Volumenstrom-Kennlinienschar ausgewertet wird, die das statische Ist-Verhalten der Druckregelventile beschreibt. Zur Begrenzung der an das betrachtete Druckregelventil anzulegenden Spannung wird eine Volumenstrom-Kennlinienschar ausgewertet, die das statische Ist-Verhalten der Druckregelventile beschreibt.

Eine sinnvolle Weiterbildung des Erfindungsgedankens besteht darin, dass eine gewünschte, durch die Strombegrenzung einzustellende Volumenstrom-Kennlinie festgelegt wird. Eine vorteilhafte Alternative des Erfindungsgedankens besteht darin, dass eine gewünschte, durch die Spannungsbegrenzung einzustellende Volumenstrom-Kennlinie einzustellende Volumenstrom-Kennlinie festgelegt wird.

Schließlich werden durch die Wahl mehrerer Differenzdruckwerte mehrere aus der gewünschten, durch die Strombegrenzung bzw. die Spannungsbegrenzung einzustellenden Volumenstrom-Kennlinie Volumenstromwerte ermittelt, die zur Bestimmung mehrerer Stromgrenzwerte aus der ersten, den Differenzdruckwerten entsprechenden Volumenstrom-Kennlinie bzw. zur Bestimmung mehrerer Spannungsgrenzwerte aus der ersten, den Differenzdruckwerten entsprechenden Volumenstrom-Kennlinie dient, die zur Bildung der gewünschten Strombegrenzungscharakteristik bzw. zur Bildung der gewünschten Spannungsbegrenzungscharakteristik herangezogen werden.

Ein erfindungsgemäßes Regelsystem zur Durchführung des vorhin erwähnten Verfahrens zeichnet sich dadurch aus, dass ein Druckregler vorgesehen ist, dem als Eingangsgrößen ein Druck-Sollwert, mit dem eine der Radbremsen des Fahrzeuges zu beaufschlagen ist, ein Druck-Istwert, mit dem eine der Radbremsen des Fahrzeuges beaufschlagt ist, sowie der an dem betrachteten Druckregelventil anliegende hydraulische Differenzdruck zugeführt werden und dessen Ausgangsgröße der Sollwert der zur Ansteuerung des Druckregelventils verwendeten elektrischen Größe ist und dem ein Begrenzungsmodul nachgeschaltet ist, dem als andere Eingangsgröße der Wert der gewünschten Begrenzung der zur Ansteuerung des Druckregelventils verwendeten elektrischen Größe zugeführt wird und dessen Ausgangsgröße der begrenzte Sollwert der zur Ansteuerung des Druckregelventils verwendeten elektrischen Größe ist.

Dem Begrenzungsmodul ist vorzugsweise ein Korrekturmodul vorgeschaltet, in dem dem an dem betrachteten Druckregelventil anliegenden hydraulischen Differenzdruckwert der Wert der gewünschten Begrenzung der zur Ansteuerung des Druckregelventils verwendeten elektrischen Größe zugeordnet wird.

Außerdem ist es besonders vorteilhaft, wenn der Druckregler aus einem linearen Regler sowie einem Vorsteuermodul besteht, wobei dem linearen Regler als Eingangsgröße die aus Druck-Sollwert und Druck-Istwert gebildete Regelabweichung zugeführt wird, während dem Vorsteuermodul ein den an den Druckregelventilen anliegenden hydraulischen Differenzdruck repräsentierendes Signal zugeführt wird, wobei das Vorsteuermodul einen Wert der zur Ansteuerung des Druckregelventils verwendeten elektrischen Größe erzeugt, der dem Öffnungspunkt der Druckregelventile entspricht und der zu der Ausgangsgröße des linearen Reglers zur Bildung des Sollwerts der zur Ansteuerung des Druckregelventils verwendeten elektrischen Größe hinzuaddiert wird.

Die Erfindung wird in der nachfolgenden Beschreibung an einem Ausführungsbeispiel unter Bezugnahme auf die beiliegende Zeichnung näher erläutert. In der Zeichnung zeigt:
- Fig. 1: ein vereinfachtes Schaltbild eines Bremsbetätigungssystems, bei dem das erfindungsgemäße Verfahren verwendet werden kann,
- Fig. 2: eine diagrammatische Darstellung einer das Verhalten der Druckregelventile beschreibenden ersten Volumenstrom-Kennlinie;
- Fig. 3: eine diagrammatische Darstellung einer das Verhalten der Druckregelventile beschreibenden zweiten Volumenstrom-Kennlinie;
- Fig. 4: eine diagrammatische Darstellung der gewünschten Begrenzungscharakteristik;
- Fig. 5: den Aufbau eines Regelkreises zur Durchführung des erfindungsgemäßen Verfahrens; und
- Fig. 6: den Aufbau des im Regelkreis gemäß Fig. 5 verwendeten Druckreglers.

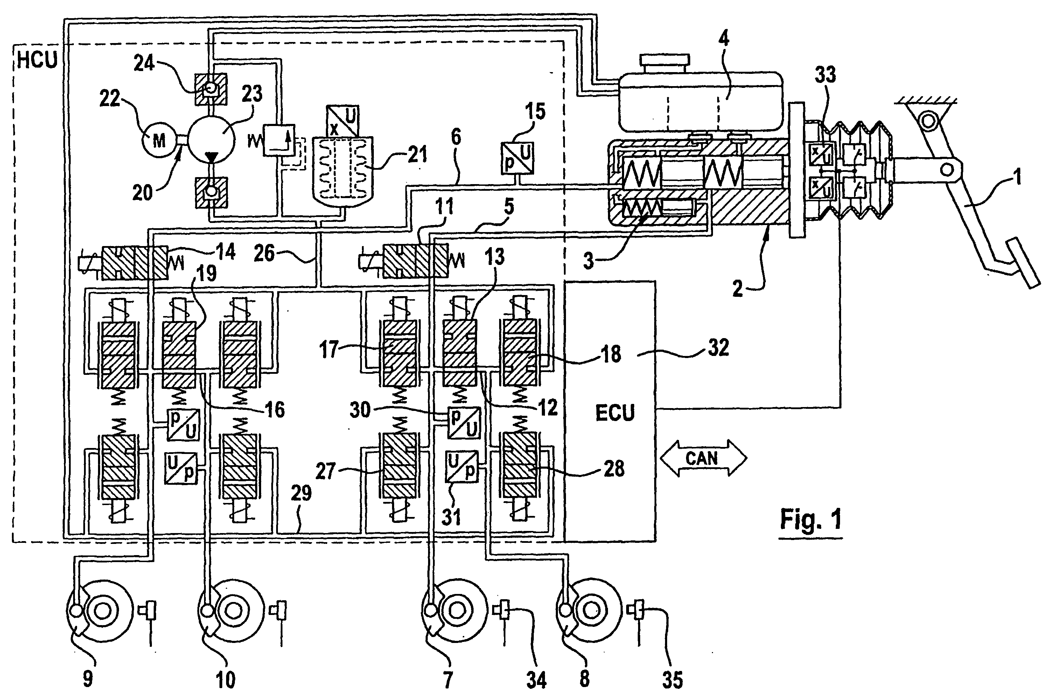

Das in Fig. 1 dargestellte, elektronisch regelbare Bremsbetätigungssystem besteht aus einem mittels eines Betätigungspedals 1 betätigbaren, zweikreisigen Hauptbremszylinder bzw. Tandemhauptzylinder 2, der mit einem Pedalwegsimulator 3 zusammenwirkt sowie zwei voneinander getrennte Druckräume aufweist, die mit einem drucklosen Druckmittelvorratsbehälter 4 in Verbindung stehen. An den ersten Druckraum (Primärdruckraum) sind mittels einer absperrbaren ersten hydraulischen Leitung 5 beispielsweise der Vorderachse zugeordnete Radbremsen 7,8 angeschlossen. Das Absperren der Leitung 5 erfolgt mittels eines ersten Trennventils 11, während in einem zwischen den Radbremsen 7, 8 geschalteten Leitungsabschnitt 12 ein elektromagnetisch betätigbares, vorzugsweise stromlos offenes (S0) Druckausgleichsventil 13 eingefügt ist, das bei Bedarf eine radindividuelle Bremsdruckregelung ermöglicht.

Der zweite Druckraum des Hauptbremszylinders 2, an den ein Drucksensor 15 angeschlossen sein kann, ist über eine mittels eines zweiten Trennventils 14 absperrbare zweite hydraulische Leitung 6 mit dem anderen, der Hinterachse zugeordneten Radbremsenpaar 9, 10 verbindbar. In einem zwischen den Radbremsen 9, 10 geschalteten Leitungsabschnitt 16 ist wieder ein elektromagnetisch betätigbares, vorzugsweise stromlos offenes (S0) Druckausgleichsventil 19 eingefügt. Da der Aufbau des an den zweiten Druckraum des Hauptbremszylinders 2 angeschlossenen hydraulischen Kreises identisch dem des in der vorstehenden Beschreibung erläuterten Bremskreises 11 entspricht, braucht er im nachfolgenden Text nicht mehr erörtert zu werden.

Wie der Zeichnung weiter zu entnehmen ist, ist ein als Fremddruckquelle dienendes Motor-Pumpen-Aggregat 20 mit einem Hochdruckspeicher 21 vorgesehen, das seinerseits aus einer mittels eines Elektromotors 22 angetriebenen Pumpe 23 sowie einem der Pumpe 23 parallel geschalteten Druckbegrenzungsventil 24 besteht. Die Saugseite der Pumpe 23 ist über ein Rückschlagventil 24 an den vorhin erwähnten Druckmittelvorratsbehälter 4 angeschlossen. Der von der Pumpe 23 aufgebrachte hydraulische Druck kann von einem nicht dargestellten Drucksensor überwacht werden.

Eine dritte hydraulische Leitung 26 verbindet den Hochdruckspeicher 21 mit den Eingangsanschlüssen von zwei elektromagnetisch analog ansteuerbaren, stromlos geschlossenen 2/2-Wegeventilen 17, 18, die als Einlaßventile den Radbremsen 7 und 8 vorgeschaltet sind. Außerdem sind die Radbremsen 7, 8 über je ein elektromagnetisch analog ansteuerbares, stromlos geschlossenes 2/2-Wegeventil bzw. Auslaßventil 27, 28 an eine vierte hydraulische Leitung 29 angeschlossen, die andererseits mit dem drucklosen Druckmittelvorratsbehälter 4 in Verbindung steht. Der in den Radbremsen 7, 8 herrschende hydraulische Druck wird mit Hilfe je eines Drucksensors 30, 31 ermittelt.

Der gemeinsamen Ansteuerung des Motor-Pumpen-Aggregats 20 sowie der Elektromagnetventile 11,13,14,17,18,19,27,28 dient eine elektronische Steuereinheit 32, der als Eingangssignale die Ausgangssignale eines mit dem Betätigungspedal 1 zusammenwirkenden Betätigungswegsensors 33 sowie des vorhin erwähnten Drucksensors 15 zugeführt werden und die eine Fahrerverzögerungswunscherkennung ermöglichen. Zur Fahrerverzögerungswunscherkennung können jedoch auch andere Mittel, beispielsweise ein die Betätigungskraft am Betätigungspedal 1 sensierender Kraftsensor verwendet werden. Als weitere Eingangsgrößen werden der elektronischen Steuereinheit 32 die Ausgangssignale der Drucksensoren 30, 31 sowie die der Geschwindigkeit des Fahrzeuges entprechenden Ausgangssignale von lediglich schematisch angedeuteten Radsensoren zugeführt, wobei die den Radbremsen 7,8 zugeordneten Radsensoren mit den Bezugszeichen 34,35 versehen sind.

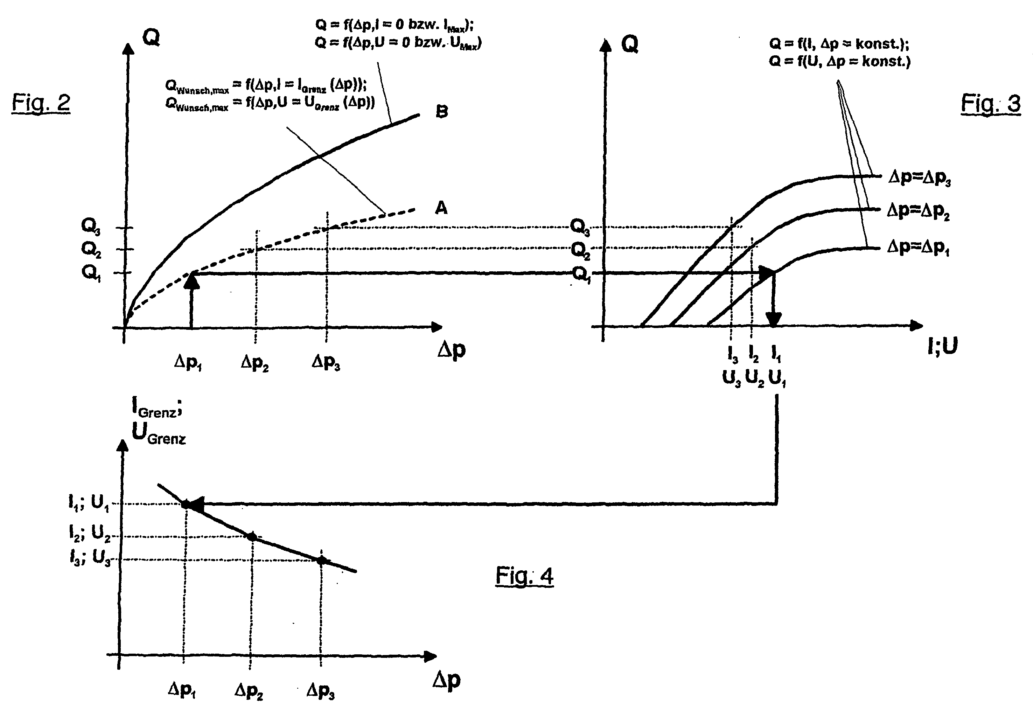

Zur quasikontinuierlichen, fein dosierbaren Druckeinstellung in den Radbremsen 7,8 mittels der vorhin erwähnten Ein- (17,18) und Auslaßventile 27, 28 wird das erfindungsgemäße Verfahren verwendet, dessen Durchführung im nachfolgenden Text im Zusammenhang mit Fig. 2 - 4 erläutert wird. Dabei ist zu berücksichtigen, daß das Verfahren nur bei denjenigen Druckregelventilen anzuwenden ist, bei denen auf Grund der konstruktiv vorgegebenen Bremsenkennlinie sowie der gewünschten Bremskraftverteilung eine Anpassung der Volumenstrom-Kennlinie erforderlich ist. Es wird davon ausgegangen, daß, wie vorhin beschrieben wurde, alle Druckregelventile 17, 18, 27, 28 als, stromlos geschlossene 2/2-Wegeventile ausgeführt sind, die mittels eines elektromagnetischen Antriebs analog ansteuerbar sind. Dementsprechend wird das Verhalten der Ventile durch Änderungen des dem elektromagnetischen Antrieb zuzuführenden elektrischen Stroms beeinflußt, der gemäß dem Erfindungsgedankens in Abhängigkeit von dem am Einlaß- (17,18) bzw. am Auslaßventil 27, 28 anliegenden hydraulischen Differenzdruck Δp wie folgt begrenzt wird:

Für jedes in Frage kommende Druckregelventil wird zunächst eine gewünschte, durch die Strombegrenzung einzustellende Volumenstrom-Kennlinie A festgelegt, die in Fig. 2 gestrichelt dargestellt wird und die durch die Gleichung Q_{Wunsch, max} = f(Δp; I = I_{Grenz}(Δp)) beschrieben ist. Mit Q_{Wunsch, max} wird der gewünschte, maximal einzustellende Volumenstrom bezeichnet, während I_{Grenz} (Δp) den maximalen, begrenzten Stromwert bezeichnet. Diese Kennlinie, die in der vorhin erwähnten elektronischen Steuereinheit 32 abgelegt wird, liegt unterhalb einer Volumenstrom-Kennlinie B, die einem nicht angepaßten Ventil entspricht und die durch die Gleichung Q = f(Δp; I = I_{Max}) beschrieben ist. Eine ebenso in der elektronischen Steuereinheit 32 abgelegte, das Ist-Verhalten des Druckregelventils darstellende Volumenstrom-Kennlinienschar mit dem Differenzdruck Δp als Parameter ist in Fig. 3 gezeigt. Die einzelnen Volumenstrom-Kennlinien folgen dabei dem funktionalen Zusammenhang Q = f(I,Δp = konst.), wobei mit Q der Ist-Volumenstrom bezeichnet wird, der bei der Ansteuerung des elektromagnetischen Antriebs mit dem Strom I durch das Druckregelventil fließt. Werden nun aus der gewünschten Volumenstrom-Kennlinie Q_{Wunsch, max} = f(Δp;I = I_{Grenz}(Δp)) beispielsweise drei verschiedene Differenzdruckwerte Δp₁, Δp₂, Δp₃ (Fig. 2) gewählt, denen gewünschte Volumenströme Q₁, Q₂, Q₃ entsprechen, so können in der Kennlinienschar gemäß Fig. 3 Stromwerte I₁, I₂, I₃ abgelesen werden, die jeweils dem gewählten Differenzdruckwert Δp₁, Δp₂, Δp₃ entsprechen. Werden nun die auf diese Art ermittelten Stromwerte I₁, I₂, I₃ über den Differenzdruckwerten Δp₁, Δp₂, Δp₃ aufgetragen, so erhält man die gewünschte Strombegrenzungscharakteristik I_{Grenz} = f(Δp), die in Fig. 4 gezeigt ist.

Die beschriebene Vorgehensweise wurde im Zusammenhang mit Druckregelventilen beschrieben, die mittels eines durch elektrischen Strom ansteuerbaren elektromagnetischen Antriebs betätigt werden und die auch stromlos offene Ventile umfassen. Das Verfahren kann jedoch selbstverständlich analog bei Druckregelventilen angewandt werden, die mittels eines Piezoantriebs angesteuert werden. In diesem Fall ist dann die das Ist-Verhalten der Piezoventile beeinflussende Größe die an den Piezoantrieb anzulegende Spannung.

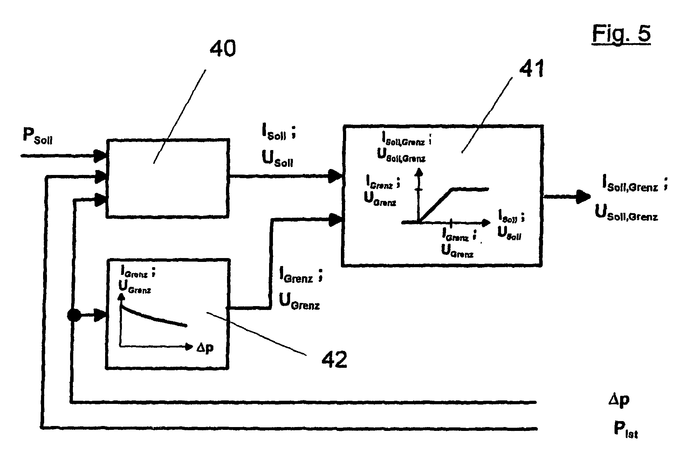

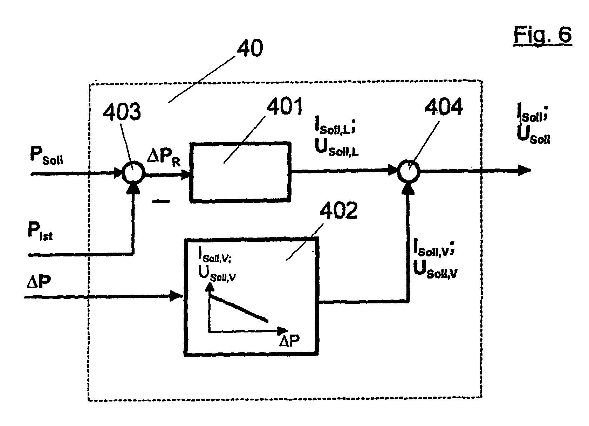

In Fig. 5 und 6 ist schließlich ein Regelsystem zur Durchführung des erfindungsgemäßen Verfahrens dargestellt. Das abgebildete Regelsystem, das einen Bestandteil der vorhin erwähnten elektronischen Steuereinheit 32 bildet, besteht im wesentlichen aus einem Druckregler 40, einem dem Druckregler 40 nachgeschalteten Begrenzungsmodul 41 sowie einem Korrekturmodul 42, durch dessen Ausgangsgröße die Funktion des Begrenzungsmoduls 41 beeinflußt wird. Als Eingangsgrößen werden dem Druckregler 40 Signale zugeführt, die den Druck-Sollwert P_{Soll}, mit dem eine der Radbremsen 7 - 10 zu beaufschlagen ist, den Druck-Istwert P_{Ist}, mit dem eine der Radbremsen 7 - 10 beaufschlagt ist, sowie den am entsprechenden Druckregelventil anliegenden Differenzdruck Δp repräsentieren. Die Ausgangsgröße des Druckreglers 40 stellt den Sollwert I_{Soll} bzw. U_{Soll} des dem elektromagnetisch ansteuerbaren Druckregelventil zuzuführenden elektrischen Stroms bzw. der an das piezoelektrisch ansteuerbare Druckregelventil anzulegenden Spannung dar. Im Korrekturmodul 42 werden verschiedenen Differenzdruckwerten Δp Strom- bzw. Spannungs-Grenzwerte I_{Grenz} bzw. U_{Grenz} zugeordnet, die zusammen mit der Ausgangsgröße des Druckreglers 40 I_{Soll} bzw. U_{Soll} dem Begrenzungsmodul 41 zugeführt werden, in dem die gewünschte, differenzdruckabhängige Begrenzung von I_{Soll} bzw. U_{Soll} stattfindet. Die Ausgangsgröße des Begrenzungsmoduls 41 stellt den begrenzten Sollwert I_{Soll,Grenz} bzw. U_{Soll,Grenz} des dem elektromagnetisch ansteuerbaren Druckregelventil zuzuführenden elektrischen Stroms bzw. der an das piezoelektrisch ansteuerbare Druckregelventil anzulegenden Spannung dar.

Wie insbesondere Fig. 6 zu entnehmen ist, wird der vorhin erwähnte Druckregler 40 im wesentlichen durch einen linearen Regler 401 sowie ein Vorsteuermodul gebildet, das mit dem Bezugszeichen 402 versehen ist. Als Eingangsgröße des linearen Reglers 401 wird eine Regelabweichung ΔP_{R} verwendet, die in einer dem Regler 401 vorgeschalteten Subtraktionsstelle 403 aus dem Druck-Sollwert P_{Soll} sowie dem Druck-Istwert P_{Ist} gebildet wird, während in einer Additionsstelle 404 zu der Ausgangsgröße I_{Soll,L} bzw. U_{Soll,L} des linearen Reglers 401 die Ausgangsgröße I_{Soll,V} bzw. U_{Soll,V} des Vorsteuermoduls 402 hinzuaddiert wird.

## Patentansprüche

1. Verfahren zur Ansteuerung eines elektronisch regelbares Bremsbetätigungssystems für Kraftfahrzeuge, mit einem drucklosen Druckmittelvorratsbehälter (4), mit mindestens einer durch eine elektronische Steuereinheit (32) ansteuerbaren Fremddruckquelle (20), mit deren Druck Radbremsen (7,8,9,10) des Fahrzeuges beaufschlagbar sind, denen mittels einer elektrischen Größe analog ansteuerbare Druckregelventile (17,18; 27,28) zugeordnet sind, die die Radbremsen (7 - 10) wahlweise mit der Fremddruckquelle (20) oder dem Druckmittelvorratsbehälter (4) verbinden, **dadurch gekennzeichnet, dass** bei der Ansteuerung des betrachteten Druckregelventils (17,18;27,28) eine von dem an ihm anliegenden hydraulischen Differenzdruck (Δp) abhängige Begrenzung der elektrischen Größe derart durchgeführt wird, dass gewünschte maximale Druckänderungsgeschwindigkeiten durch Vorgabe eines gewünschten maximalen Druckmittelvolumenstroms (Q_{Wunsh, max}) abhängig von dem hydraulischen Differenzdruck (Δp) eingestellt werden.

2. Verfahren zur Ansteuerung eines elektronisch regelbares Bremsbetätigungssystems nach Anspruch 1 **dadurch gekennzeichnet, daß** die Druckregelventile (17,18;27,28) als elektromagnetisch ansteuerbare Ventile ausgeführt sind und daß die elektrische Größe ein dem elektromagnetischen Antrieb zuzuführender elektrischer Strom ist.

3. Verfahren zur Ansteuerung eines elektronisch regelbares Bremsbetätigungssystems nach Anspruch 1 **dadurch gekennzeichnet, daß** die Druckregelventile als piezoelektrisch ansteuerbare Ventile ausgeführt sind und daß die elektrische Größe eine an den Piezoantrieb anzulegende elektrische Spannung ist.

4. Verfahren zur Ansteuerung eines elektronisch regelbares Bremsbetätigungssystems nach Anspruch 2 **dadurch gekennzeichnet, daß** zur Begrenzung des dem betrachteten Druckregelventil (17,18;27,28) zuzuführenden Stromes eine Volumenstrom-Kennlinienschar (Q = f(I,Δp = konst.)) ausgewertet wird, die das statische Ist-Verhalten des Druckregelventils (17,18;27,28) beschreibt.

5. Verfahren zur Ansteuerung eines elektronisch regelbares Bremsbetätigungssystems nach Anspruch 4 **dadurch gekennzeichnet, daß** eine gewünschte, durch die Strombegrenzung einzustellende Volumenstrom-Kennlinie (Q_{Wunsch, max} = f(Δp;I = I_{Grenz}(Δp)) (A) festgelegt wird.

6. Verfahren zur Ansteuerung eines elektronisch regelbares Bremsbetätigungssystems nach Anspruch 4 und 5 **dadurch gekennzeichnet, daß** durch die Wahl mehrerer Differenzdruckwerte (Δp_{1,2,3}) mehrere Volumenstromwerte (Q_{1,2,3})aus der gewünschten, durch die Strombegrenzung einzustellenden Volumenstrom-Kennlinie (Q_{Wunsch, max} = f (Δp; I = I_{Grenz}(Δp))) (A) ermittelt werden, die zur Bestimmung mehrerer Stromgrenzwerte (I_{1,2,3}) aus der den Differenzdruckwerten (Δp_{1,2,3}) entsprechenden Volumenstrom-Kennlinienschar (Q = f(I,Δp = konst.)) dient, die zur Bildung der gewünschten Strombegrenzungscharakteristik (I_{Grenz} = f(Δp)) herangezogen werden.

7. Verfahren zur Ansteuerung eines elektronisch regelbares Bremsbetätigungssystems nach Anspruch 3 **dadurch gekennzeichnet, daß** zur Begrenzung der an das betrachtete Druckregelventil anzulegenden Spannung eine Volumenstrom-Kennlinienschar (Q = f(U,Δp = konst.)) ausgewertet wird, die das statische Ist-Verhalten des Druckregelventils beschreibt.

8. Verfahren zur Ansteuerung eines elektronisch regelbares Bremsbetätigungssystems nach Anspruch 7 **dadurch gekennzeichnet, daß** eine gewünschte, durch die Spannungsbegrenzung einzustellende Volumenstrom-Kennlinie (Q_{Wunsch,max} = f(Δp;U = U_{Grenz} (Δp))) (A) festgelegt wird.

9. Verfahren zur Ansteuerung eines elektronisch regelbares Bremsbetätigungssystems nach Anspruch 7 und 8 **dadurch gekennzeichnet, daß** durch die Wahl mehrerer Differenzdruckwerte (Δp_{1,2,3}) mehrere Volumenstromwerte (Q_{1,2,3})aus der gewünschten, durch die Spannungsbegrenzung einzustellenden Volumenstrom-Kennlinie (Q_{Wunsch,max} = f(Δp;U = U_{Grenz}(Δp))) (A) ermittelt werden, die zur Bestimmung mehrerer Spannungsgrenzwerte (U_{1,2,3}) aus der den Differenzdruckwerten (Δp_{1,2,3}) entsprechenden Volumenstrom-Kennlinienschar (Q = f (U, Δp = konst.)) dient, die zur Bildung der gewünschten Spannungsbegrenzungscharakteristik (U_{Grenz} = f(ΔP)) herangezogen werden.

10. Regelsystem zur Durchführung des Verfahrens nach einem der vorhergehenden Ansprüche **dadurch gekennzeichnet, dass** ein Druckregler (40) vorgesehen ist, dem als Eingangsgrößen ein Druck-Sollwert (P_{Soll}), mit dem eine der Radbremsen (7,8,9,10) des Fahrzeuges zu beaufschlagen ist, ein Druck-Istwert (P_{Ist}), mit dem eine der Radbremsen (7,8,9,10) des Fahrzeuges beaufschlagt ist, sowie der an dem betrachteten Druckregelventil (17,18;27,28) anliegende hydraulische Differenzdruckwert (Δp) zugeführt werden und dessen Ausgangsgröße der Sollwert (I_{Soll} bzw. U_{Soll}) der zur Ansteuerung des Druckregelventils (17,18;27,28) verwendeten elektrischen Größe ist und dem ein Begrenzungsmodul (41) nachgeschaltet ist, dem als andere Eingangsgröße der Wert der gemäß dem Verfahren gewünschten Begrenzung der zur Ansteuerung des Druckregelventils (17,18;27,28) verwendeten elektrischen Größe (I_{Grenz} = f(Δp) bzw. U_{Grenz} = f(Δp)) zugeführt wird und dessen Ausgangsgröße der begrenzte Sollwert (I_{Soll,Grenz} bzw. U_{Soll, Grenz}) der zur Ansteuerung des Druckregelventils (17,18;27,28) verwendeten elektrischen Größe (I,U) ist.

11. Regelsystem zur Ansteuerung eines elektronisch regelbaren Bremsbetätigungssystems nach Anspruch 10 **dadurch gekennzeichnet, daß** dem Begrenzungsmodul (41) ein Korrekturmodul (42) vorgeschaltet ist, in dem dem an dem betrachteten Druckregelventil (17,18;27,28) anliegenden hydraulischen Differenzdruckwert (Δp) der Wert der gewünschten Begrenzung der zur Ansteuerung des Druckregelventils (17,18;27,28) verwendeten elektrischen Größe (I_{Grenz} = f(Δp) bzw. U_{Grenz} = f(Δp)) zugeordnet wird.

12. Regelsystem zur Ansteuerung eines elektronisch regelbaren Bremsbetätigungssystems nach Anspruch 10 oder 11 **dadurch gekennzeichnet, daß** der Druckregler (40) aus einem linearen Regler (401) sowie einem Vorsteuermodul (402) besteht, wobei dem linearen Regler (401) als Eingangsgröße die aus Druck-Sollwert (P_{Soll}) und Druck-Istwert (P_{Ist}) gebildete Regelabweichung (ΔP_{R}) zugeführt wird, während dem Vorsteuermodul (402) ein den an dem betrachteten Druckregelventil (17,18;27,28) anliegenden hydraulischen Differenzdruck (Δp) repräsentierendes Signal zugeführt wird, wobei das Vorsteuermodul (402) einen Wert (I_{Soll,V}; U_{Soll,V}) der zur Ansteuerung des Druckregelventils (17,18;27,28) verwendeten elektrischen Größe (I,U) erzeugt, der dem Öffnungspunkt des Druckregelventils (17,18;27,28) entspricht und der zu der Ausgangsgröße (I_{Soll,L}; U_{Soll,L}) des linearen Reglers (401) zur Bildung des Sollwerts (I_{Soll}, U_{Soll}) der zur Ansteuerung des Druckregelventils (17,18;27,28) verwendeten elektrischen Größe hinzuaddiert wird.

## Claims

1. Method for actuating an electronically controllable brake actuation system for motor vehicles, including a non-pressurized pressure fluid supply reservoir (4), at least one independent pressure source (20) that can be actuated by an electronic control unit (32) and whose pressure can be applied to wheel brakes (7, 8, 9, 10) of the vehicle, with pressure control valves (17, 18; 27, 28) that can be actuated in an analog manner by means of an electric quantity being associated with said wheel brakes and connecting the wheel brakes (7 to 10) optionally with the independent pressure source (20) or the pressure fluid supply reservoir (4),
**characterized in that** on actuation of the pressure control valve (17, 18; 27, 28) under review, the electric quantity is limited in dependence on the hydraulic differential pressure (Δp) applied to the said valve in such a manner that desired maximum pressure variation speeds are adjusted by presetting a desired maximum pressure fluid volume flow (Q_{desire, max}) in dependence on the hydraulic differential pressure (Δp).

2. Method for actuating an electronically controllable brake actuation system as claimed in claim 1,
**characterized in that** the pressure control valves (17,18;27,28) are configured as electromagnetically actuatable valves, and that the electric quantity is an electric current being supplied to the electromagnetic drive.

3. Method for actuating an electronically controllable brake actuation system as claimed in claim 1,
**characterized in that** the pressure control valves are configured as piezoelectrically actuatable valves, and that the electric quantity is an electric voltage being applied to the piezoelectric drive.

4. Method for actuating an electronically controllable brake actuation system as claimed in claim 2,
**characterized in that** for limiting the current being supplied to the pressure control valve (17, 18; 27, 28) under review, a volume flow family of characteristics (Q = f(I, Δp = const.)) is evaluated which describes the static actual performance of the pressure control valve (17, 18; 27, 28).

5. Method for actuating an electronically controllable brake actuation system as claimed in claim 4,
**characterized in that** a desired volume flow characteristic curve (Q_{desire, max} = f(Δp;I = Iₗᵢₘᵢₜ(Δp)) (A) is determined which is to be adjusted by the current limitation.

6. Method for actuating an electronically controllable brake actuation system as claimed in claims 4 and 5,
**characterized in that** the selection of several differential pressure values (Δp_{1,2,3}) allows determining several volume flow values (Q_{1,2,3}) from the desired volume flow characteristic curve (Q_{desire, max} = f(Δp;I = Iₗᵢₘᵢₜ (Δp))) (A), said curve being used to determine several current limit values (I_{1,2,3}) from the first volume flow characteristic curve (Q = f(I,ΔP = const.)) corresponding to the differential pressure values (Δp_{1,2,3}), said current limit values being taken into account for the formation of the desired current limitation characteristics (Iₗᵢₘᵢₜ = f(Δp)).

7. Method for actuating an electronically controllable brake actuation system as claimed in claim 3,
**characterized in that** for limiting the voltage to be applied to the pressure control valve under review, a volume flow family of characteristics (Q = f(U, Δp = const.)) is evaluated which describes the static actual performance of the pressure control valve.

8. Method for actuating an electronically controllable brake actuation system as claimed in claim 7,
**characterized in that** a desired volume flow characteristic curve (Q_{desire, max} = F(Δp;I = Uₗᵢₘᵢₜ(Δp))) (A) is determined which is to be adjusted by the voltage limitation.

9. Method for actuating an electronically controllable brake actuation system as claimed in claim 7 and 8,
**characterized in that** the selection of several differential pressure values (Δp_{1,2,3}) allows determining several volume flow values (Q_{1,2,3}) from the desired volume flow characteristic curve (Q_{desire, max} = f(Δp; U = Uₗᵢₘᵢₜ(Δp))) (A), said curve being used to determine several voltage limit values (U_{1,2,3}) from the volume flow family of characteristics (Q = f(U,ΔP = const.)) corresponding to the differential pressure values (Δp_{1,2,3}), said voltage limit values being taken into account for the formation of the desired voltage limitation characteristics (Uₗᵢₘᵢₜ = f(Δp)).

10. Control system for implementing the method as claimed in any one of the preceding claims,
**characterized in that** a pressure controller (40) is provided to which are sent, as input quantities, a nominal pressure value (Pₙₒₘᵢₙₐₗ) to be applied to one of the wheel brakes (7, 8, 9, 10) of the vehicle, an actual pressure value (P_{actual}) which is applied to one of the wheel brakes (7, 8, 9, 10) of the vehicle, as well as the hydraulic differential pressure value (Δp) applied to the pressure control valve (17, 18; 27, 28) under review, and whose output quantity is the nominal value (Iₙₒₘᵢₙₐₗ or Uₙₒₘᵢₙₐₗ, respectively) of the electric quantity used for actuating the pressure control valve (17, 18; 27, 28), with a limitation module (41) being connected downstream of said pressure controller, to which limitation module is sent the value of the limitation of the electric quantity (Iₗᵢₘᵢₜ = f(Δp) or, respectively, Uₗᵢₘᵢₜ = f(Δp)) desired according to the method and used for the actuation of the pressure control valve (17, 18; 27, 28) as another input quantity, and the output quantity whereof is the limited nominal value (I_{nominal, limit} or U_{nominal, limit}, respectively) of the electric quantity (I, U) used for actuating the pressure control valve (17, 18; 27, 28).

11. Control system for actuating an electronically controllable brake actuation system as claimed in claim 10,
**characterized in that** connected upstream of the limitation module (41) is a correction module (42) in which the value of the desired limitation of the electric quantity (Iₗᵢₘᵢₜ = f(Δp) or Uₗᵢₘᵢₜ = f(Δp)), respectively, is associated with the hydraulic differential pressure value (Δp) that is applied to the pressure control valve (17, 18; 27, 28) under review.

12. Control system for actuating an electronically controllable brake actuation system as claimed in claim 10 or 11,
**characterized in that** the pressure controller (40) comprises a linear controller (401) and a pilot control module (402), with the deviation (ΔP_{R}) that is produced from the nominal pressure value (Pₙₒₘᵢₙₐₗ) and the actual pressure value (P_{actual}) being sent as an input quantity to the linear controller (401), while a signal representative of the hydraulic differential pressure (Δp) applied to the pressure control valve (17, 18; 27, 28) under review is sent to the pilot control module (402), with said pilot control module (402) producing a value (I_{nominal,L}; U_{nominal,L}) of the electric quantity (I, U) used for actuating the pressure control valve (17, 18; 27, 28), said value corresponding to the point of opening of the pressure control valve (17, 18; 27, 28) and being added to the output quantity (I_{nominal,v;} U_{nominal,v}) of the linear controller (401) for producing the nominal value (Iₙₒₘᵢₙₐₗ, Uₙₒₘᵢₙₐₗ) of the electric quantity used for actuating the pressure control valve (17, 18; 27, 28).

## Revendications

1. Procédé de commande d'un système d'actionnement de frein à régulation électronique pour véhicule automobile, comportant un réservoir de fluide sous pression (4) hors pression, comportant au moins une source de pression externe (20) pouvant être commandée par une unité de commande électronique (32), dont la pression permet d'agir sur les freins (7, 8, 9, 10) du véhicule auxquels sont associées des soupapes de régulation de pression (17, 18 ; 27, 28) qui peuvent être commandées de manière analogique au moyen d'une grandeur électrique et qui relient les freins des roues (7-10) au choix à la source de pression externe (20) ou au réservoir de fluide sous pression (4), **caractérisé en ce que** lorsque la soupape de régulation (17, 18 ; 27, 28) considérée est commandée, la grandeur électrique est limitée, en fonction de la différence de pression hydraulique (Δp) qui s'applique à celle-ci, de manière que des vitesses maximales voulues de la variation de la pression soient réglées par sélection d'un flux volumique maximal voulu du fluide sous pression (Q_{Wunsch, max}) en fonction de la différence de pression hydraulique (Δp).

2. Procédé de commande d'un système d'actionnement de frein à régulation électronique selon la revendication 1, **caractérisé en ce que** les soupapes de régulation de la pression (17, 18 ; 27, 28) sont réalisées comme soupapes à commande électromagnétique et **en ce que** la grandeur électrique est un courant électrique à amener au dispositif d'entraînement électromagnétique.

3. Procédé de commande d'un système d'actionnement de frein à régulation électronique selon la revendication 1, **caractérisé en ce que** les soupapes de régulation de la pression sont réalisées comme soupapes à commande piézoélectrique, et **en ce que** la grandeur électrique est une tension électrique à appliquer à la piézo-commande.

4. Procédé de commande d'un système d'actionnement de frein à régulation électronique selon la revendication 2, **caractérisé en ce que** pour limiter le courant à amener à la soupape de régulation de pression (17, 18 ; 27, 28) considérée, on évalue un ensemble de courbes caractéristiques du flux volumique (Q = f (I, Δp) = constante)) qui décrit le comportement statique réel de la soupape de régulation de pression (17, 18 ; 27, 28).

5. Procédé de commande d'un système d'actionnement de frein à régulation électronique selon la revendication 4, **caractérisé en ce qu'**il est défini une courbe caractéristique du flux volumique (Q_{Wunsch, max}) = f (Δp, I = I_{Grenz} (Δp)) (A) voulu, à régler par la limitation du courant.

6. Procédé de commande d'un système d'actionnement de frein à régulation électronique selon les revendications 4 et 5, **caractérisé en ce que** par le choix de plusieurs valeurs de la pression différentielle (Δp_{1,2,3}) on détermine plusieurs valeurs du flux volumique (Q_{1,2,3}) à partir de la courbe caractéristique du flux volumique (Q_{Wunsch,max}) = f (Δp, I = I_{Grenz} (Δp)) (A) à régler par la limitation du courant, qui sert à déterminer plusieurs valeurs limites du courant (I_{1,2,3}) à partir de l'ensemble de courbes caractéristiques du flux volumique (Q = f (I, Δp) = constante)) correspondant aux valeurs de la pression différentielle (Δp_{1,2,3}), qui sont utilisées pour former la caractéristique de limitation du courant (I_{Grenz} = f(Δp)) voulue.

7. Procédé de commande d'un système d'actionnement de frein à régulation électronique selon la revendication 3, **caractérisé en ce que** pour limiter la tension à appliquer à la soupape de régulation de pression considérée, on évalue un ensemble de courbes caractéristiques du flux volumique (Q = f (U, Δp = constante)) qui décrit le comportement statique réel de la soupape de régulation de pression.

8. Procédé de commande d'un système d'actionnement de frein à régulation électronique selon la revendication 7, **caractérisé en ce qu'**il est défini une courbe caractéristique du flux volumique (Q_{Wunsch, maX}) = f (Δp, U = U_{Grenz} (Δp)) (A) voulue, à régler par la limitation de tension.

9. Procédé de commande d'un système d'actionnement de frein à régulation électronique selon les revendications 7 et 8, **caractérisé en ce que** par le choix de plusieurs valeurs de la pression différentielle (Δp_{1,2,3}) on détermine plusieurs valeurs du flux volumique (Q_{1,2,3}) à partir de la courbe caractéristique du flux volumique (Q_{wunsch, max}) = f (Δp, U = U_{Grenz} (Δp))) (A) à régler par la limitation de tension, qui sert à déterminer plusieurs valeurs limites de tension (U_{1,2,3}) à partir de l'ensemble de courbes caractéristiques du flux volumique (Q = f (U, Δp) = constante)) correspondant aux valeurs de la pression différentielle (Δ_{p1,2,3}), qui sont utilisées pour former la caractéristique de limitation de tension (U_{Grenz} = f(Δp))) voulue.

10. Système de régulation pour la mise en oeuvre du procédé selon l'une des revendications précédentes, **caractérisé en ce qu'**il est prévu un régulateur de pression (40) auquel est envoyé comme grandeurs d'entrée une valeur de consigne de la pression (P_{Soll}) qui doit agir sur l'un des freins des roues (7, 8, 9, 10) du véhicule, une valeur réelle de la pression (P_{Ist}) qui agit sur l'un des freins des roues (7, 8, 9, 10) du véhicule, ainsi que la valeur de la pression différentielle hydraulique (Δp) s'appliquant à la soupape de régulation de pression (17, 18 ; 27, 28) considérée, et dont la grandeur de sortie est la valeur de consigne (I_{Soll} ou U_{Soll}) de la grandeur électrique utilisée pour commander la soupape de régulation de pression (17, 18 ; 27, 28), et en amont duquel est monté un module de limitation (41) auquel est envoyée comme autre grandeur d'entrée la valeur de la limitation voulue suivant le procédé de la grandeur électrique (I_{Grenz} = f (Δp) ou U_{Grenz} = f(Δp)) utilisée pour commander la soupape de régulation de pression (17, 18 ; 27, 28), et dont la grandeur de sortie est la valeur de consigne limitée (I_{Soll, Grenz} ou U_{Soll, Grenz}) de la grandeur électrique (I, U) utilisée pour commander la soupape de régulation de pression (17, 18 ; 27, 28).

11. Système de régulation pour la mise en oeuvre du procédé selon la revendication 10, **caractérisé en ce qu'**en amont du module de limitation (41) est monté un module de correction (42) dans lequel à la valeur de la pression différentielle hydraulique (Δp) s'appliquant à la soupape de régulation de pression (17, 18 ; 27, 28) considérée, est associée la valeur de la limitation voulue de la grandeur électrique (I_{Grenz} = f (Δp) ou U_{Grenz} = f (Δp)) utilisée pour commander la soupape de régulation de pression (17, 18 ; 27, 28).

12. Système de régulation pour la mise en oeuvre du procédé selon la revendication 10 ou 11, **caractérisé en ce que** le régulateur de pression (40) est constitué d'une régulateur linéaire (401) ainsi que d'un module pilote (402), au régulateur linéaire (401) étant envoyé comme grandeur d'entrée, l'écart de régulation (ΔP_{R}) formé à partir de la valeur de consigne de la pression (P_{Soll}) et de la valeur réelle de la pression (P_{Ist}), tandis qu'au module pilote (402) est envoyé un signal représentant la pression différentielle hydraulique (Δp) s'appliquant à la soupape de régulation de pression (17, 18 ; 27, 28) considérée, le module pilote (402) générant une valeur (I_{Soll, V} ; U_{Soll,V}) de la grandeur électrique (I, U) utilisée pour la commande de la soupape de régulation de pression (17, 18 ; 27, 28), laquelle valeur correspond au point d'ouverture de la soupape de régulation de pression (17, 18 ; 27, 28) et qui est additionnée à la grandeur de sortie (I_{Soll,L} ; U_{Soll,L}) du régulateur linéaire (401), pour former la valeur de consigne (I_{Soll}, U_{Soll}) de la grandeur électrique utilisée pour commander la soupape de régulation de pression (17, 18 ; 27, 28).
